Europäisches Patentamt

European Patent Office

Office européen des brevets

(19)

(11) Veröffentlichungsnummer: **0 090 259
B1**

(12) **EUROPÄISCHE PATENTSCHRIFT**

(45) Veröffentlichungstag der Patentschrift:
04.06.86

(21) Anmeldenummer: 83102592.9

(22) Anmeldetag: 16.03.83

(51) Int. Cl.⁴: **C 09 C 1/00,** C 09 C 3/06, C 09 C 3/08

(54) **Verfahren zur Hydrophobierung von Perlglanzpigmenten.**

(30) Priorität: **26.03.82 DE 3211166**

(43) Veröffentlichungstag der Anmeldung:
**05.10.83 Patentblatt 83/40**

(45) Bekanntmachung des Hinweises auf die Patenterteilung:
**04.06.86 Patentblatt 86/23**

(84) Benannte Vertragsstaaten:
**BE CH DE FR GB IT LI NL**

(56) Entgegenhaltungen:
**FR - A - 2 281 410
FR - A - 2 291 258
US - A - 3 333 980**

(73) Patentinhaber: **Merck Patent Gesellschaft mit beschränkter Haftung, Frankfurter Strasse 250, D-6100 Darmstadt (DE)**

(72) Erfinder: **Bernhard, Horst, Dr., Haus Nr. 52, A-4164 Schwarzenberg (AT)**

# Beschreibung

Die Erfindung betrifft ein Verfahren zur Hydrophobierung von Perlglanzpigmenten auf der Basis von mit Metalloxiden beschichteten Glimmerplättchen.

Perlglanzpigmente auf der Basis von mit Metalloxiden beschichteten Glimmerplättchen werden auf vielen technischen Gebieten, wie z.B. in der Kosmetik, als Pigmente für Nagellacke, Lippenstifte, Puder und dergleichen, aber auch zur Pigmentierung von Kunststoffen und Lacken aller Art verwendet. Damit diese Perlglanzpigmente optimal ihre Eigenschaften entfalten können ist es notwendig, dass die Pigmente in homogener Verteilung vorliegen, ohne dass Agglomerate gebildet werden.

Insbesondere bei der Einarbeitung von Perlglanzpigmenten in organische Formulierungen ergeben sich immer wieder Schwierigkeiten, eine homogene Verteilung zu erreichen. Von normalen Farbpigmenten und Füllstoffen ist bekannt, dass durch eine Hydrophobierung ein verbessertes Einarbeiten in z.B. Kunststoffe erreicht wird. In der US-PS 3 333 980 wird ein Verfahren beschrieben, bei dem solche feinteiligen Materialien durch Behandeln mit einer Lösung eines hydrolysierbaren polyvalenten Metallsalzes und Alkalisieren der Aufschlämmung mit einem basischen Überzug versehen werden, der durch Behandlung mit einer Fettsäure neutralisiert wird. Als Metalle können dabei alle Metalle der Gruppen II-B, III-B, IV-B, V-B und VI-B, sowie Mangan aus der Gruppe VII-B, Eisen, Kobalt und Nickel aus der Gruppe VIII, Kupfer aus der Gruppe I-B, Aluminium, Gallium und Indium aus der Gruppe III-A, Germanium, Zinn und Blei aus der Gruppe IV-A, Antimon und Wismut aus der Gruppe V-A, Polonium aus der Gruppe VI-A sowie die Metalle der Lanthaniden und der Actiniden eingesetzt werden.

Bei Perlglanzpigmenten, deren Pigmenteigenschaften auf Interferenzerscheinungen bei der Lichtreflexion an den dünnen Metalloxidbeschichtungen beruhen und bei denen die Qualität des Pigments, sein Glanz und seine Farbkraft ganz entscheidend von der Oberflächenbeschaffenheit des Pigments abhängt, war zu befürchten, dass durch Massnahmen zur Hydrophobierung der Perlglanz erheblich beeinflusst wird.

Tatsächlich ist auch bis heute kein solches Verfahren bekannt geworden, nach dem Perlglanzpigmente hydrophobiert werden können, ohne dass der Glanz darunter leidet, obwohl solche Pigmente seit mehr als 20 Jahren bekannt sind. Es bestand also die Aufgabe, ein Verfahren zur Hydrophobierung von Perlglanzpigmenten zu finden, das einerseits die Eigenschaften des Pigments so verändert, dass es leicht in homogener Verteilung in organische Formulierung eingearbeitet werden kann, das aber andererseits die optischen Eigenschaften des Pigments nicht negativ beeinflusst.

Es wurde nun gefunden, dass überraschenderweise diese Aufgabe dadurch gelöst werden kann, dass das Pigment zunächst mit einer basischen Chrom- oder Aluminiumverbindung beschichtet und danach mit einer längerkettigen Carbonsäure behandelt wird.

Gegenstand der Erfindung ist daher ein Verfahren zur Hydrophobierung von Perlglanzpigmenten auf der Basis von mit Metalloxiden beschichteten Glimmerplättchen, das dadurch gekennzeichnet ist, dass die Pigmente in wässriger Aufschlämmung mit 0,1 bis 10 Gewichtsprozent, berechnet als Oxid, einer basischen Chrom- oder Aluminiumverbindung beschichtet und danach mit der Lösung einer gegebenenfalls substituierten Carbonsäure mit mehr als vier Kohlenstoffatomen pro Carboxylgruppe in einer Menge von etwa 0,01 bis etwa 50 µmol pro Quadratmeter zu behandelnder Pigmentoberfläche behandelt werden.

Gegenstand der Erfindung sind auch die so gewonnenen Pigmente und ihre Verwendung.

Mit dem neuen Verfahren wird eine gute Hydrophobierung erreicht, die die Einarbeitung der Pigmente in organische Formulierungen sehr verbessert. Entgegen den Befürchtungen werden Glanz und Farbkraft der Pigmente durch die zusätzliche Beschichtung nicht beeinträchtigt. Überraschenderweise können sogar die Eigenschaften der Pigmente, insbesondere die Licht- und Wetterbeständigkeit, durch die erfindungsgemässe Hydrophobierung verbessert werden.

Als Ausgangsmaterial für die erfindungsgemässe Hydrophobierung können alle üblichen Perlglanzpigmente auf Glimmerbasis verwendet werden. Solche Pigmente sind beispielsweise beschrieben in den Deutschen Patentschriften 1 467 468, 1 959 198, 2 009 566, 2 214 545 und 2 522 572. Zur Durchführung des erfindungsgemässen Verfahrens wird das Ausgangsmaterial in Wasser suspendiert und es wird in der Suspension ein zur Fällung einer basischen Chrom- oder Aluminiumverbindung geeigneter pH-Wert eingestellt. In der Regel ist dafür ein pH-Wert von etwa 4 bis etwa 9 geeignet, insbesondere der Bereich von etwa 5 bis etwa 8.

Zu dieser Suspension wird langsam eine Lösung eines Chrom- oder Aluminiumsalzes zulaufen lassen, wobei der pH-Wert durch entsprechende Massnahmen, wie z.B. gleichzeitiges Zudosieren einer Base oder einer Säure, weitgehend konstant gehalten wird. Unter den herrschenden pH-Bedingungen kommt es zur Hydrolyse und Abscheidung von Chrom- oder Aluminiumhydroxid. Sollen zusätzlich Silikate mitaufgefällt werden, verwendet man dazu vorzugsweise Alkalisilikatlösungen, die gleichzeitig zudosiert werden.

Die Geschwindigkeit, mit der die Salzlösungen zudosiert werden, ist an sich nicht kritisch, es soll jedoch sichergestellt werden, dass die pro Zeiteinheit ausgefällte Menge der Chrom- oder Aluminiumverbindung möglichst quantitativ auf der Pigmentoberfläche abgeschieden wird. In der Regel wird daher die Zulaufgeschwindigkeit so eingestellt, dass pro Minute und pro Quadratmeter zu beschichtender Oberfläche etwa 0,01 bis 25 × $10^{-5}$ mol der Salzlösung zugeführt werden.

Obwohl die Beschichtung der Pigmente bei beliebigen Temperaturen zwischen Gefrier- und Siedepunkt der Suspension durchgeführt werden kann, wird doch vorzugsweise bei erhöhter Temperatur gearbeitet, um eine möglichst homogene Fällung zu erreichen. Temperaturen zwischen etwa 40 und 90 °C und insbesondere zwischen 50 und 80 °C sind daher bevorzugt.

Zur Beschichtung können an sich alle gut wasserlöslichen Chrom- oder Aluminiumsalze eingesetzt werden, die hydrolysierbar sind. Beispielhaft sind zu nennen: Aluminiumchlorid, Aluminiumsulfat, Kaliumaluminiumsulfat, Aluminiumhydroxokomplexe (z.B. Al(OH) Cl$_2$, KAl(OH)$_6$ o.ä.), Chrom(III)-chlorid, Chrom(III)-sulfat und Chromalaun. Daneben können auch Chrom(VI)-salze verwendet werden, wobei zusätzlich ein Reduktionsmittel wie z.B. Hydroxylamin oder Hydrazin zur Erzeugung der Chrom(III)-ionen zugegeben werden muss.

Falls nicht eine reine Hydroxidfällung vorgenommen werden soll, sondern eine silikathaltige Fällung, wird gleichzeitig mit der Metallsalzlösung eine Alkalisilikatlösung zudosiert. Dabei kann die Silikatmenge so berechnet sein, dass Silikat in stöchiometrischer Menge zur Bildung eines Chrom- oder Aluminiumsilikats zugegeben wird. Vorzugsweise wird jedoch weniger Silikat eingesetzt, z.B. eine Menge die etwa 1 bis etwa 50% der stöchiometrischen Menge entspricht.

Die Menge der auf die Pigmentoberfläche aufgefällten Chrom- oder Aluminiumverbindung sollte so bemessen sein, dass zumindest die gesamte Oberfläche mit einer dünnen Schicht bedeckt ist. Dickere Schichten machen sich zunächst nicht negativ bemerkbar; bei zu dicken Schichten geht jedoch zunehmend der Glanz und die Leuchtkraft der Pigmente verloren.

In der Regel werden deshalb die Chrom- oder Aluminiumverbindungen in solchen Mengen eingesetzt, dass etwa 0,1 bis etwa 100 µmol pro Quadratmeter Pigmentoberfläche, vorzugsweise etwa 0,5 bis etwa 50 µmol pro Quadratmeter abgeschieden werden. Dies entspricht einem Prozentanteil am Gewicht der beschichteten Pigmente von etwa 0,1 bis etwa 10%.

Die so beschichteten Pigmente werden dann mit der Lösung einer Carbonsäure behandelt. Geeignet sind alle Carbonsäuren mit einem ausreichend langen hydrophoben Rest. Dies sind insbesondere einbasische Säuren mit 5 und mehr Kohlenstoffatomen. Bevorzugt sind Carbonsäuren mit 10 bis 20 Kohlenstoffatomen. Falls zwei- oder mehrbasische Carbonsäuren verwendet werden, sollten ebenfalls pro Carboxylgruppe mindestens 4 bis 5 Kohlenstoffatome vorhanden sein. So hat sich beispielsweise gezeigt, dass Buttersäure, Bernsteinsäure oder Adipinsäure für den erfindungsgemässen Zweck nicht gut geeignet sind, während z.B. Azelainsäure, Rizinolsäure, Ölsäure, Palmitinsäure, Caprinsäure, Stearinsäure, Sebacinsäure und Laurinsäure gut geeignet sind.

Es können selbstverständlich auch substituierte Carbonsäuren verwendet werden. Dabei sollte lediglich sichergestellt werden, dass nicht durch hydrophile Substituenten der Effekt der Hydrophobierung zunichte gemacht wird. Andererseits kann es für bestimmte Zwecke vorteilhaft sein, den Grad der Hydrophobierung dem Verwendungszweck anzupassen, wozu u.a. die Verwendung von unterschiedlich substituierten Carbonsäuren oder Carbonsäuren mit kürzeren oder längeren Kohlenstoffketten geeignet ist.

Die erfindungsgemäss verwendeten Carbonsäuren lagern sich an basische Stellen der vorher aufgebrachten Beschichtung an und werden dort fest gebunden. Bei der Behandlung der beschichteten Pigmente mit der Carbonsäure ergibt sich daher ein Sättigungswert über den hinaus keine weitere Säure mehr gebunden wird. Es ist aus diesem Grund nicht besonders kritisch, in welchen Mengen die Carbonsäure eingesetzt wird, da ein Überschuss an Säure in Lösung bleibt und beim Auswaschen der Pigmente entfernt wird. Andererseits kann, falls erwünscht, die Säure auch im Unterschuss eingesetzt werden, um nur eine Teilhydrophobierung zu erreichen. In der Regel wird die Säure jedoch in einer Menge von etwa 0,01 bis etwa 50 µmol pro Quadratmeter Pigmentoberfläche eingesetzt.

Nach der Zugabe der Säure wird die Pigmentsuspension noch einige Zeit, z.B. etwa 10 bis 100 Minuten nachgerührt und danach abfiltriert, gewaschen und getrocknet. Die erfindungsgemässen Pigmente sind danach wie die bekannten Pigmente verwendbar, so z.B. in der Kosmetik, in Kunststoffen, Lacken und Farben, zeichnen sich aber gegenüber den bekannten Perlglanzpigmenten durch eine verbesserte Einarbeitbarkeit vor allem in organische Formulierungen aus.

Beispiel 1

Eine Suspension von 330 g eines Rutil TiO$_2$-Glimmerpigmentes mit einer Plättchengrösse zwischen 10 und 70 µm in 2 Liter Wasser wird auf 70 °C erhitzt und auf einen pH-Wert von 6,0 eingestellt. Die Suspension wird langsam zunächst mit einer Lösung von 50 g AlCl$_3$ · 6H$_2$O in 500 ml Wasser versetzt, wobei der pH-Wert durch Zudosieren einer verdünnten Ammoniaklösung konstant bei etwa 6 gehalten wird. Danach wird mit einer Lösung von 2 g Ölsäure in 50 ml Wasser versetzt noch etwa 30 Minuten bei 70 °C gerührt und dann abfiltriert, gewaschen und getrocknet.

Beispiel 2

Eine Suspension von 330 g eines Rutil TiO$_2$-Glimmerpigmentes mit einer Plättchengrösse zwischen 10 und 70 µm in 2 Liter Wasser wird auf 70 °C erhitzt und auf einen pH-Wert von etwa 6,5 eingestellt. Zu der Suspension wird langsam zunächst eine Lösung von 11 g Chromalaun in 500 ml Wasser gegeben, wobei der pH-Wert der Suspension durch Zudosieren einer verdünnten Ammoniaklösung bei etwa 6,5 gehalten wird. Danach wird eine Lösung von 5 g Caprinsäure in 50 ml Wasser zugegeben. Es wird noch etwa 30 Minuten bei 70 °C gerührt und schliesslich abfiltriert, gewaschen und getrocknet.

## Patentansprüche

1. Verfahren zur Hydrophobierung von Perlglanzpigmenten auf der Basis von mit Metalloxiden beschichteten Glimmerplättchen, dadurch gekennzeichnet, dass die Pigmente in wässriger Aufschlämmung mit 0,1 bis 10 Gewichtsprozent, berechnet als Oxid, einer basischen Chrom- oder Aluminiumverbindung beschichtet und danach mit der Lösung einer gegebenenfalls substituierten Carbonsäure mit mehr als vier Kohlenstoffatomen pro Carboxylgruppe in einer Menge von etwa 0,01 bis etwa 50 µmol pro Quadratmeter zu behandelnder Pigmentoberfläche behandelt werden.

2. Verfahren nach Anspruch 1, dadurch gekennzeichnet, dass als basische Chrom- oder Aluminiumverbindungen die Hydroxide oder die Silikate verwendet werden.

3. Hydrophobe Perlglanzpigmente, dadurch gekennzeichnet, dass sie nach einem der Verfahren der Ansprüche 1–2 hydrophobiert sind.

4. Verwendung der hydrophoben Perlglanzpigmente nach Anspruch 3 in organischen Formulierungen.

## Revendications

1. Procédé d'imperméabilisation de pigments d'un lustre nacré à base de plaquettes de mica enduites d'oxydes métalliques, caractérisé en ce que les pigments en suspension aqueuse sont enduits de 0,1 à 10% en poids (calculé en oxyde) d'un composé basique de chrome ou d'aluminium, pour être ensuite traités avec une solution d'un acide carboxylique éventuellement substitué comportant plus de 4 atomes de carbone par groupe carboxy, en une quantité d'environ 0,01 à environ 50 µmoles par m$^2$ de surface de pigments à traiter.

2. Procédé selon la revendication 1, caractérisé en ce que, comme composés basiques de chrome ou d'aluminium, on utilise les hydroxydes ou les silicates.

3. Pigments hydrophobes d'un lustre nacré, caractérisés en ce qu'ils sont imperméabilisés selon un des procédés des revendications 1–2.

4. Utilisation des pigments hydrophobes d'un lustre nacré selon la revendication 3 dans des formulations organiques.

## Claims

1. Process for rendering nacreous pigments based on mica platelets coated with metal oxides hydrophobic, characterised in that the pigments are coated, in aqueous suspension, with 0.1 to 10 per cent by weight, calculated as the oxide, of a basic chromium or aluminium compound and are then treated with a solution of an optionally substituted carboxylic acid containing more than four carbon atoms per carboxyl group in an amount of about 0.01 to about 50 µmols per square metre of pigment surface to be treated.

2. Process according to Claim 1, characterised in that hydroxides or silicates are used as the basic chromium or aluminium compounds.

3. Hydrophobic nacreous pigments, characterised in that they have been rendered hydrophobic by one of the processes of Claims 1–2.

4. Use of the hydrophobic nacreous pigments according to Claim 3 in organic formulations.